# FASCICULE DE BREVET EUROPEEN

(11) **EP 2 184 202 B1**
(45) Date de publication et mention de la délivrance du brevet: **18.01.2012**
(21) Numéro de dépôt: 09175348.3
(22) Date de dépôt: 09.11.2009
(51) Int. Cl.: B60N 2/30, B60N 2/42

(54) **Siège pour un véhicule automobile**
Sitz für ein Kraftfahrzeug
Seat for an automotive vehicle

(30) Priorité: 10.11.2008 FR 0857624
(43) Date de publication de la demande: 12.05.2010
(73) Titulaire: Peugeot Citroën Automobiles SA, 78140 Vélizy-Villacoublay (FR)
(72) Inventeur: Combeau, Frédéric, 25750 DESANDANS (FR)

(56) Documents cités:
- WO-A-2006/130975
- FR-A- 2 899 527
- US-A1- 2001 026 075
- US-A1- 2004 169 404

## Description

La présente invention concerne un siège pour un véhicule automobile, du type comprenant :
- une assise ;
- un dossier monté à rotation sur l'assise ; et
- des moyens de basculement de l'assise et du dossier entre une position d'utilisation dans laquelle le dossier est redressé par rapport à l'assise, et une position escamotée dans une cuvette ménagée dans un plancher du véhicule et dans laquelle le dossier est rabattu sur l'assise.

Actuellement, on connaît des véhicules automobiles qui possèdent trois rangées de sièges dont le rang est numéroté de 1 à 3 en allant de l'avant vers l'arrière du véhicule, c'est-à-dire une rangée de sièges avant, une rangée de sièges intermédiaires et une rangée de sièges arrière.

Les sièges de rang 1 et 2 sont placés respectivement en regard des portes avant et arrière du véhicule, tandis que les sièges de rang 3 sont positionnés dans la zone du véhicule réservée à l'espace de chargement.

Les sièges de rang 3, par siège on entend un siège individuel ou une banquette pouvant accueillir deux ou trois passagers, peuvent présenter une structure permettant leur escamotage dans une cuvette prévue dans le plancher du véhicule lorsque leur utilisation n'est pas requise. De cette manière, l'espace de chargement du véhicule retrouve sa pleine capacité.

La faculté d'escamotage des sièges de rang 3 s'avère donc extrêmement utile.

Cependant, les cinématiques existantes de tels sièges, qui permettent d'une part le maintien de ces sièges dans une position d'utilisation et d'autre part leur escamotage dans une cuvette, présentent généralement un ensemble de bielles articulées qui en font des systèmes complexes, tels que celui décrit dans le document US 2004/0169404 A1. De plus, le positionnement et la fixation de l'ensemble de bielles articulées dans le fond de la cuvette ne sont pas des opérations faciles à réaliser pour les opérateurs.

L'invention a pour but de proposer un système de fabrication, de montage et d'utilisation plus simples.

Le document WO-A-2006/130975 décrit un siége conforme au preambule de la revendication 1.

A cet effet, l'invention a pour objet un siège du type précité, comprennant au moins un pied avant et au moins un pied arrière caractérisé en ce que les dits, moyens de basculement, comportent chacun une première extrémité montée articulée sur l'assise, et une deuxième extrémité reposant sur le fond de la cuvette et montée articulée sur au moins une pièce de fixation fixée sur le plancher sensiblement au bord de la cuvette.

Le siège selon l'invention peut comporter une ou plusieurs des caractéristiques suivantes faisant l'objet des revendications dépendantes.
- les moyens de basculement comprennent deux pieds avant sensiblement parallèles dont les premières extrémités sont fixées sur un tube transversal supérieur monté articulé sur l'assise, et dont les deuxièmes extrémités sont fixées sur un tube transversal inférieur monté articulé sur une pièce de fixation ;
- la pièce de fixation dudit au moins un pied avant est formée par une équerre comportant une plaque apte à être fixée sur le plancher et prolongée par au moins une patte ayant une extrémité libre recourbée déterminant un passage tubulaire pour le tube transversal inférieur ;
- les moyens de basculement comprennent deux pieds arrière sensiblement parallèles dont les premières extrémités sont articulées sur l'assise, et dont les deuxièmes extrémités sont articulées sur une tige transversale inférieure solidaire à chaque extrémité d'une pièce de fixation ;
- le tube transversal inférieur est relié à la tige transversale inférieure par au moins une barre de liaison longitudinale s'étendant entre ladite extrémité recourbée et ladite tige transversale ;
- chaque pièce de fixation des pieds arrière est formée par une équerre comportant une plaque apte à être fixée sur le plancher et prolongée par une patte solidaire de l'extrémité correspondante de la tige transversale inférieure ;
- le siège comprend au moins un organe anti-intrusion fixé sur ledit au moins un pied avant et adapté pour s'engager dans un orifice ménagé dans la pièce de fixation dudit au moins un pied avant ; et
- le siège comprend un ressort disposé sur le tube transversal inférieur de manière à amortir l'escamotage et à participer au relevage du siège.

L'invention a également pour objet un véhicule automobile, du type comprenant un plancher dans lequel est ménagée une cuvette, caractérisé en ce qu'il comprend au moins un siège tel que décrit précédemment, le siège étant reçu dans la cuvette et fixé sur le plancher par les pièces de fixation.

L'invention sera mieux comprise à la lecture de la description qui va suivre, donnée uniquement à titre d'exemple et faite en se référant aux dessins annexés, sur lesquels :
- la Figure 1 est une vue en perspective, de l'avant, d'une partie d'un véhicule automobile équipé de deux sièges selon l'invention ;
- la Figure 2 est une vue en perspective, de l'avant, d'un des deux sièges de la Figure 1 ;
- la Figure 3 est une vue en perspective, de l'arrière, du siège de la Figure 2;
- la Figure 4 est une vue analogue à celle de la Figure 3 montrant en détail l'avant du siège ;
- la Figure 5 est une vue en perspective, de l'intérieur, de moyens de commande de basculement du siège de la Figure 2 ; et
- les Figure 6, 7 et 8 sont des vues latérales du siège de la Figure 2 respectivement dans des positions d'utilisation, tablette et escamotée.

Dans tout ce qui suit, les termes de position et d'orientation utilisés s'entendent par rapport aux orientations usuelles d'un véhicule automobile.

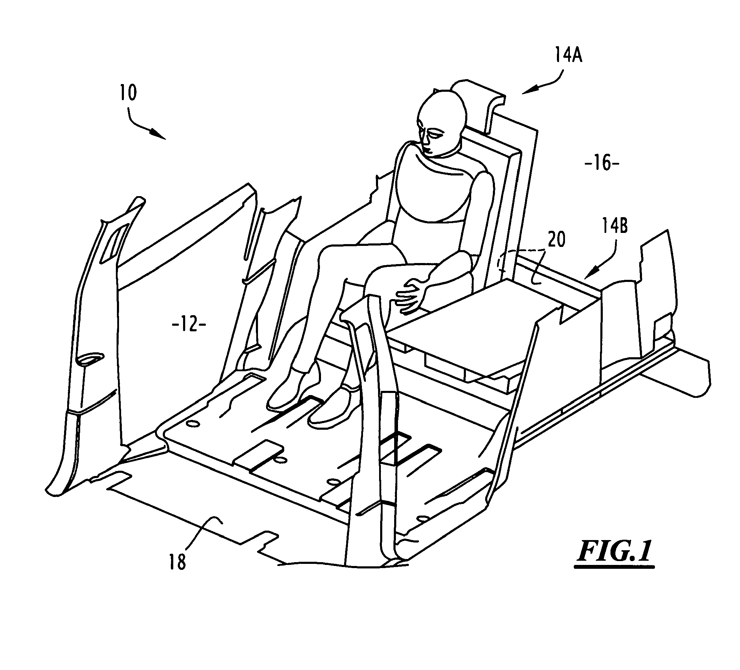

La Figure 1 représente, de façon schématique, une partie 10 d'un habitacle de véhicule automobile qui possède trois rangées de sièges numérotées de 1 à 3, une rangée de sièges avant, une rangée de sièges intermédiaires et une rangée de sièges arrière.

Les sièges de rang 1 et 2 (non représentés) sont placés respectivement en face des portes avant et arrière 12 du véhicule, et les sièges 14 de rang 3, ici au nombre de deux, sont placés dans l'espace de chargement 16 du véhicule.

Le siège 14A est dans une position d'utilisation et le siège 14B est dans une position tablette comme cela sera expliqué plus en détail ultérieurement.

Chaque siège 14 peut être escamoté et pour cela, le véhicule présente dans son plancher 18 deux cuvettes 20 de rangement des sièges 14.

Les cuvettes 20 possèdent une forme sensiblement parallélépipédique.

Les sièges 14A et 14B sont identiques et un seul de ces sièges, référencé 14 ci-après, sera décrit.

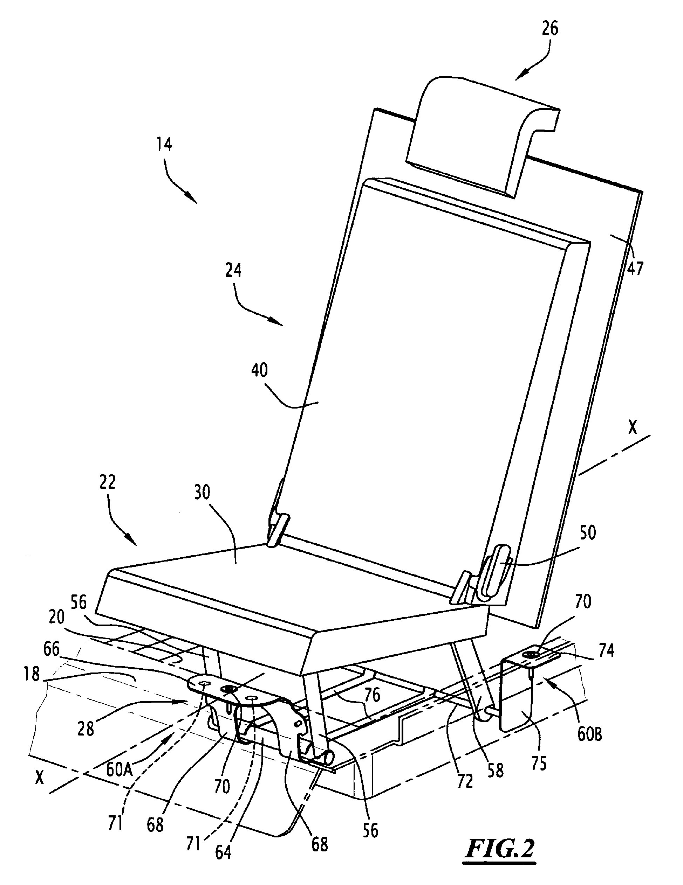

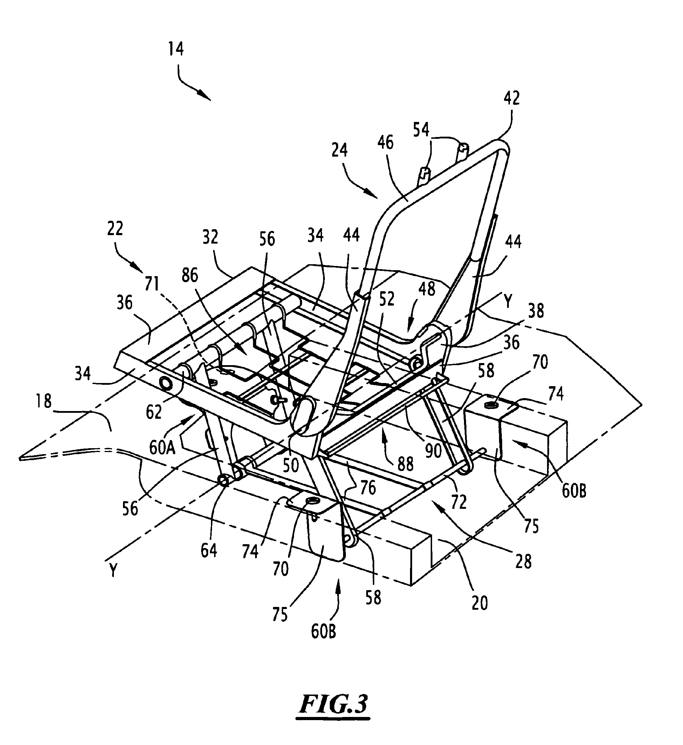

Comme on le voit mieux sur les Figures 2 et 3, le siège 14 comprend une assise 22, un dossier 24 monté rotatif sur l'assise 22, un appui-tête 26 monté sur le dossier 24 et des moyens 28 de basculement de l'assise 22 et du dossier 24.

L'assise 22 comporte un coussin d'assise 30 fixé sur une armature d'assise 32.

L'armature d'assise 32 comprend deux barres latérales 34 reliées entre elles par deux barres transversales 36.

Chaque barre latérale 34 présente une protubérance 38 sensiblement semi-circulaire qui fait saillie vers le haut de l'extrémité arrière de la barre latérale 34 correspondante.

Le dossier 24 comporte un coussin de dossier 40 fixé sur une armature de dossier 42.

L'armature de dossier 42 comprend deux montants latéraux 44 reliés entre eux par un montant transversal supérieur 46 sensiblement en forme de U.

Les montants latéraux 44 sont articulés, au niveau de leur extrémité inférieure, sur les protubérances 38 de l'armature d'assise 32 autour d'un axe transversal Y.

Une plaque 47 représentée à la Figure 2, de forme sensiblement rectangulaire, est fixée sur le dossier 24.

Le siège 14 comprend des moyens de commande du pivotement du dossier 24 sur l'assise 22.

Ces moyens de commande comprennent un élément de commande d'inclinaison 48 du dossier 24 par rapport à l'assise 22, comportant deux molettes de réglage 50 reliées par une tige transversale 52.

Les molettes 50 sont disposées de chaque côté du dossier 24, les extrémités de la tige 52 traversant les protubérances 38 et les extrémités inférieures des montants latéraux 44.

L'élément de commande d'inclinaison 48 est relié à un mécanisme à came de manière à régler la position angulaire du dossier 24 par rapport à l'assise 22.

L'appuie-tête 26 est réglable en hauteur, et monté sur le dossier 24 par l'intermédiaire de deux broches 54 fixées sur le montant transversal 46 de l'armature de dossier 42.

Les moyens 28 de basculement de l'assise 22 et du dossier 24 comportent au moins un pied avant 56, au moins un pied arrière 58 et au moins une pièce 60 de fixation de l'assise 22 sur le plancher 18 sensiblement au bord de la cuvette 20.

Dans l'exemple de réalisation représenté sur le Figures, les moyens 28 de basculement de l'assise 22 et du dossier 24 comportent deux pieds avant 56, deux pieds arrière 58 et trois pièces 60 de fixation de l'assise 22 sur le plancher 18.

Les pieds avant et arrière 56, 58 comportent chacun une première extrémité montée articulée sur l'assise 22, et une deuxième extrémité reposant sur le fond de la cuvette 20 et montée articulée sur au moins une pièce de fixation 60.

Les pieds avant 56 présentent une forme sensiblement cylindrique et sont disposés sensiblement parallèlement.

Les pieds avant 56 sont reliés l'un à l'autre par un tube transversal supérieur 62 et un tube transversal inférieur 64 fixés respectivement sur leurs première et deuxième extrémités, les tubes 62 et 64 étant disposés sensiblement parallèlement entre eux et sensiblement perpendiculairement aux pieds avant 56.

Le tube supérieur 62 est placé transversalement sur une partie avant de l'assise 22, et monté rotatif autour de son axe principal entre les deux barres latérales 34.

Le tube supérieur 62 est de préférence un tube anti-sous-marinage.

Le tube inférieur 64 repose sur le fond à l'avant de la cuvette 20, et est monté rotatif autour de son axe principal par rapport à une pièce de fixation avant 60A.

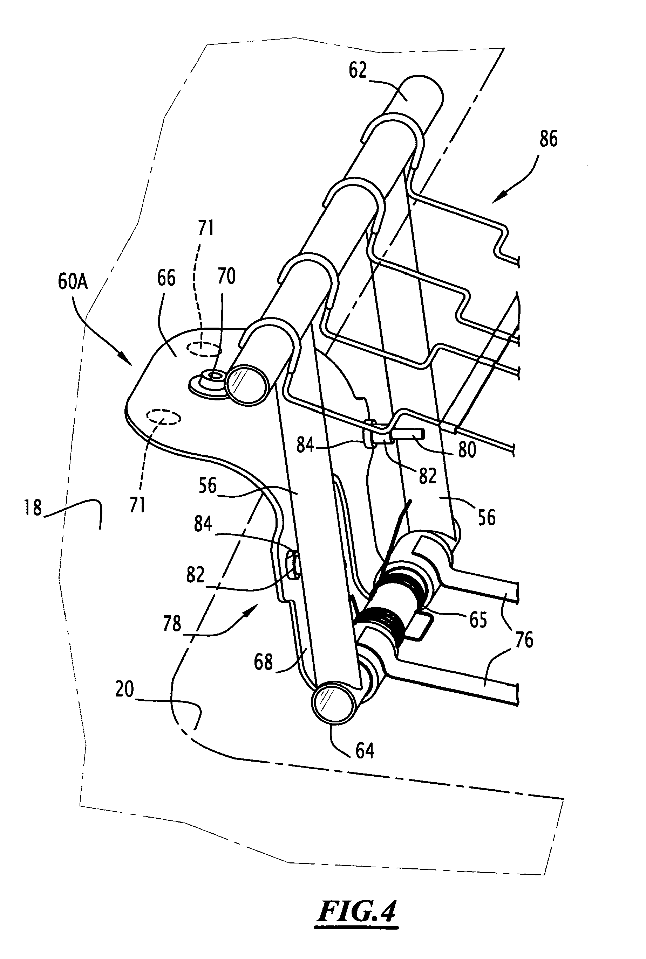

Un ressort 65 (Figure 4) disposé sur le tube inférieur 64 permet d'amortir l'escamotage et participe au relevage du siège 14.

La pièce de fixation avant 60A est formé par une équerre comportant une plaque métallique 66 prolongée par deux pattes 68 dont l'extrémité libre est recourbée sur elle-même, déterminant un passage tubulaire de manière à enserrer le tube inférieur 64.

La plaque 66 est fixée sur le plancher 18, en avant et sensiblement au bord de la cuvette 20, par un organe de fixation, tel qu'une vis 70.

Deux patins élastiques 71 sont prévus entre la plaque 66 et le plancher 18, de part et d'autre de la vis 70, et permettent d'obtenir un appui parfait entre la plaque 66 et le plancher 18, sans basculement autour de l'axe longitudinal X du véhicule (Figure 2), de manière à équilibrer l'avant du siège 14.

Les pieds arrière 58 présentent une forme sensiblement aplatie et sont disposés sensiblement parallèlement.

Chaque pied arrière 58 est articulé, par sa première extrémité supérieure, sur l'extrémité arrière des barres latérales 34 de l'armature d'assise 32.

Les pieds arrière 58 sont également articulés, par leur deuxième extrémité inférieure qui repose sur le fond à l'arrière de la cuvette 20, autour d'une même tige transversale inférieure 72.

La tige inférieure 72 est fixée par ses extrémités à deux pièces de fixation arrière 60B disposées de part et d'autre de l'assise 22.

Chaque pièce de fixation arrière 60B est formée par une équerre comportant une plaque métallique 74 prolongée sensiblement perpendiculairement par une patte 75 fixée à l'extrémité correspondante de la tige inférieure 72.

La plaque 74 est fixée sur le plancher 18, sensiblement au bord de la cuvette 20, par un organe de fixation, tel qu'une vis 70.

Les pieds avant et arrière 56, 58 sont reliés entre eux par deux barres de liaison longitudinales 76 fixées d'une part sur l'extrémité recourbée des pattes 68 de la pièce de fixation avant 60A, et d'autre part sur la tige inférieure 72.

En référence à la Figure 4, le siège 14 comprend un dispositif anti-intrusion 78 permettant de renforcer le siège 14 dans des situations difficiles.

Le dispositif anti-intrusion 78 comporte deux organes anti-intrusion 80, deux fils par exemple, munis chacun d'une butée anti-bruit 82.

Chaque fil anti-intrusion 80 est soudé sur un des pieds avant 56 et traverse un orifice 84 ménagé dans une des pattes 68 de la pièce de fixation avant 60A.

Le dispositif anti-intrusion 78 est particulièrement utile :
- lors d'un choc avant, lorsque le fessier du passager entre en contact avec le tube anti-sous-marinage 62, le dispositif anti-intrusion 78 permet de limiter l'affaissement de l'avant du siège 14 et d'éviter ainsi au passager de glisser sous la sangle ventrale de la ceinture de sécurité ;
- lors d'un choc arrière basse vitesse, le dispositif anti-intrusion 78 permet de limiter les déformations du siège 14 et d'éviter ainsi son remplacement ;
- lors d'un choc arrière grande vitesse, le dispositif anti-intrusion 78 permet de maintenir le siège 14 sur l'avant, évitant ainsi le basculement du siège 14 autour des pièces de fixation arrière 60B ; et
- lors d'un choc latéral, le dispositif anti-intrusion 78 permet de limiter l'affaissement du siège 14 sur le côté.

L'assise 22 comprend en outre une garniture d'assise formée par un ensemble 86 de fils reliés par des sangles, l'ensemble 86 étant accroché sur le tube supérieur 62 et sur la barre transversale arrière 36.

Le siège 14 comprend des moyens de commande du basculement de l'assise 22 et du dossier 24 d'une position d'utilisation à une position escamotée, en passant par une position tablette.

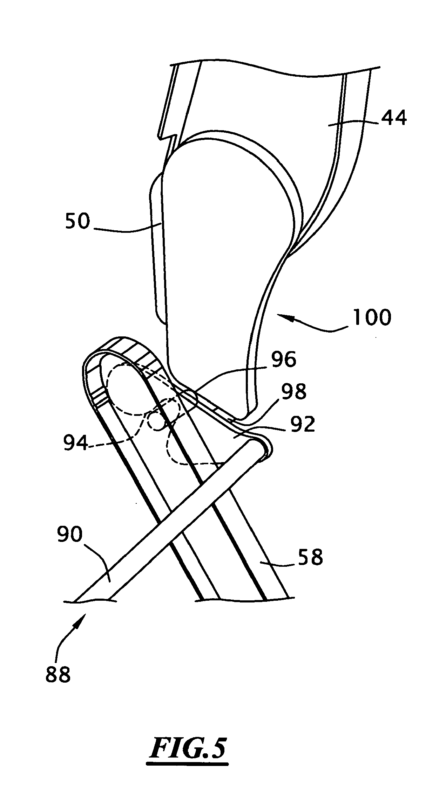

Comme représenté sur les Figures 3 et 5, ces moyens de commande comportent un élément de commande d'escamotage 88 du siège 14 relié à un mécanisme à came, qui sera décrit ultérieurement.

L'élément de commande d'escamotage 88 comporte un arbre transversal 90 disposé derrière la barre transversale 36 de l'armature d'assise 32, et prolongé à chaque extrémité par un flasque 92.

Chaque flasque 92 s'étend sensiblement perpendiculairement à l'axe de l'arbre 90, et est articulé sur le pied arrière 58 correspondant autour d'un axe transversal.

Chaque flasque 92 présente une entaille 94 qui s'emboîte sur un axe 96 prévu sur le pied arrière 58 respectif de manière à bloquer le pied arrière 58 en position.

Chaque flasque 92 possède en outre une saillie 98 qui s'étend latéralement vers l'extérieur depuis la surface du flasque 92 respectif.

Le siège 14 comprend un mécanisme à came 100 (Figure 5) de part et d'autre de l'assise 22 permettant de régler la position angulaire du dossier 24 par rapport à l'assise 22 et de rabattre complètement le dossier 24 sur l'assise 22.

Le mécanisme à came 100 est relié à la molette de réglage 50 de l'élément de commande d'inclinaison 48, à la saillie 98 de l'élément de commande d'escamotage 88, et à l'extrémité inférieure du montant latéral 44 de l'armature de dossier 42.

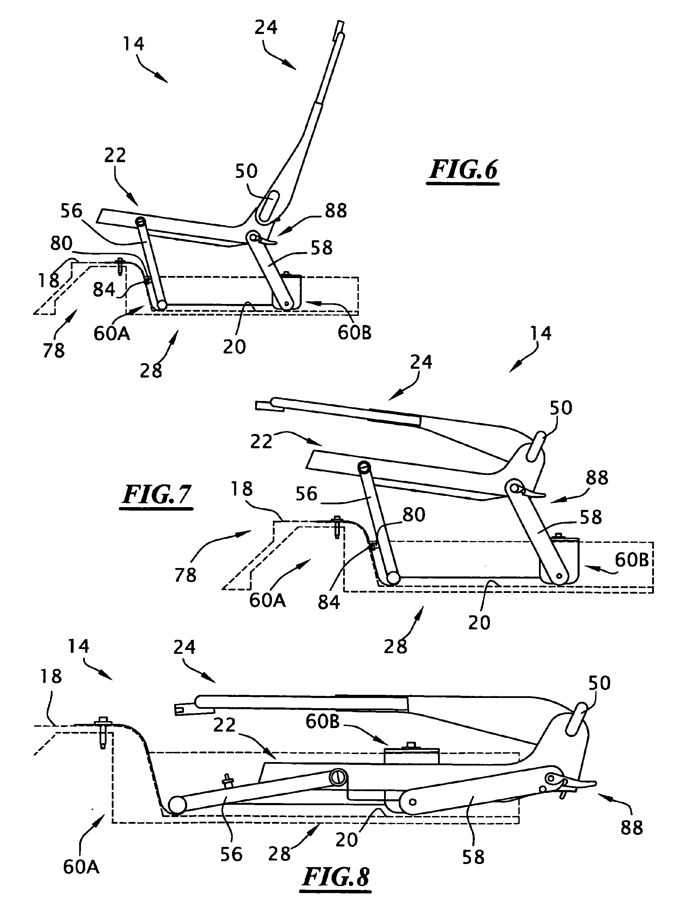

Le fonctionnement du siège 14 va maintenant être décrit en référence aux Figures 6, 7 et 8.

Initialement, le siège 14 est dans une position d'utilisation (Figure 6) permettant à un utilisateur de s'asseoir sur le siège 14.

Dans la position d'utilisation, le dossier 24 est redressé par rapport à l'assise 22, formant sensiblement un angle de 90° avec l'assise 22.

Les pieds avant 56 s'étendent sensiblement verticalement, légèrement inclinés par rapport à la verticale de manière à assurer la stabilité de l'assise 22.

Les fils anti-intrusion 80 traversent les orifices 84 de la pièce de fixation avant 60A, activant de ce fait le dispositif anti-intrusion 78 en cas de choc.

Les pieds arrière 58 s'étendent sensiblement verticalement, légèrement inclinés par rapport à la verticale de manière à assurer la stabilité de l'assise 22.

L'assise 22 étant légèrement inclinée vers l'arrière, les pieds arrière 58 sont plus courts que les pieds avant 56, et légèrement plus inclinés par rapport à la verticale que les pieds avant 56 de manière à rattraper l'angle de rotation effectué par les pieds avant 56 lors du passage de la position d'utilisation à la position escamotée.

Les pieds arrière 58 sont verrouillés en position par l'élément de commande d'escamotage 88, les entailles 94 des flasques 92 s'emboîtant sur les axes 96.

Dans la position d'utilisation, l'utilisateur du siège 14 a la possibilité de régler l'inclinaison du dossier 24 par rapport à l'assise 22 pour un confort optimal.

Dans ce cas, l'utilisateur tourne la molette de réglage 50, ce qui active le mécanisme à came 100 (Figure 5) et le dossier 24 bascule ainsi vers l'avant ou vers l'arrière, selon le sens de rotation de la molette 50.

Lorsque l'utilisateur désire augmenter la capacité de l'espace de chargement 16 du véhicule, il procède de la manière suivante.

L'utilisateur règle tout d'abord la hauteur de l'appui-tête 26 de sorte que ce dernier soit disposé à proximité du dossier 24.

Ensuite, l'utilisateur actionne l'élément de commande d'escamotage 88 en l'agrippant manuellement et en le soulevant légèrement vers le haut.

Cette action active le mécanisme à came 100 (Figure 5) et fait basculer le dossier 24 vers l'avant ; le dossier 24 est alors rabattu sur l'assise 22.

Le siège 14 est ainsi dans une position tablette (Figure 7), permettant à l'utilisateur de poser des objets sur la plaque 47 qui se retrouve sensiblement horizontale.

Pour escamoter complètement le siège 14 dans la cuvette 20, l'utilisateur soulève l'élément de commande d'escamotage 88 de manière à libérer les axes 96 des entailles 94.

Les pieds arrière 58 sont alors déverrouillés et libres de pivoter.

En tirant simplement l'élément de commande d'escamotage 88 vers l'arrière, les pieds avant et arrière 56, 58 effectuent un mouvement de rotation vers l'arrière jusqu'à reposer sur le fond de la cuvette 20.

Le siège 14 se retrouve alors dans la position escamotée (Figure 8), le dossier 24 étant rabattu sur l'assise 22 et les pieds avant et arrière 56, 58 s'étendant sensiblement horizontalement.

Dans la position escamotée, la plaque 47 fixée sur le dossier 24 obture la cuvette 20 et affleure sensiblement le plancher 18.

Le siège 14 est rangé dans la cuvette 20, augmentant ainsi la capacité de l'espace de chargement 16 du véhicule.

Pour relever le siège 14 de la position escamotée à la position d'utilisation, l'utilisateur tire, au moyen par exemple d'une sangle prévue sur la partie supérieure du dossier 24, le siège 14 vers le haut et vers l'avant.

Le siège 14 se retrouve dans la position tablette de la Figure 7.

L'utilisateur relève alors le dossier 24.

Le siège 14 est dans la position d'utilisation de la Figure 6.

L'invention propose donc un siège pouvant être rangé dans une cuvette d'un plancher de véhicule en un seul mouvement et d'une seule main, et dont la cinématique d'escamotage est très simple.

Selon l'invention, le dispositif anti-intrusion est complètement intégré au siège, ce qui permet de limiter les dispersions sur la caisse du véhicule lors du montage du siège sur le plancher.

De plus, le montage du siège sur le plancher du véhicule requiert un nombre minimum de pièces de fixation, ici au nombre de trois. Ces pièces de fixation peuvent être facilement fixées par un opérateur sur le plancher du véhicule. En effet, il lui suffit de poser le siège dans la cuvette correspondante et de procéder à la fixation de ces pièces de fixation sur le plancher.

En outre, l'espace de chargement du véhicule ne nécessitant plus d'être optimisé lorsque le siège est utilisé, les largeurs ainsi que les longueurs d'assise et de dossier peuvent être augmentées.

En variante, le siège est un siège de rang 2.

En variante encore, l'invention s'applique à une banquette à deux ou trois places, la forme de la cuvette étant adaptée en conséquence pour recevoir la banquette.

Toujours en variante, la plaque fixée sur le dossier comporte des équipements divers, tels qu'un accoudoir et/ou un porte-gobelet, destinés notamment à un utilisateur d'un siège adjacent au siège mis dans la position tablette.

## Revendications

1. Siège (14) pour un véhicule automobile, du type comprenant :
- une assise (22) ;
- un dossier (24) monté à rotation sur l'assise (22) ; et
- des moyens (28) de basculement de l'assise (22) et du dossier (24) entre une position d'utilisation dans laquelle le dossier (24) est redressé par rapport à l'assise (22), et une position escamotée dans une cuvette (20) ménagée dans un plancher (18) du véhicule et dans laquelle le dossier (24) est rabattu sur l'assise (22), comprennant au moins un pied avant (56) et au moins un pied arrière (58), **caractérisé en ce que** les dits moyens de basculement (28) comportent chacun une première extrémité montée articulée sur l'assise (22), et une deuxième extrémité reposant sur le fond de la cuvette (20) et montée articulée sur au moins une pièce de fixation (60) fixée sur le plancher (18) sensiblement au bord de la cuvette (20).

2. Siège (14) selon la revendication 1, **caractérisé en ce que** les moyens de basculement (28) comprennent deux pieds avant (56) sensiblement parallèles dont les premières extrémités sont fixées sur un tube transversal supérieur (62) monté articulé sur l'assise (22), et dont les deuxièmes extrémités sont fixées sur un tube transversal inférieur (64) monté articulé sur une pièce de fixation (60A).

3. Siège (14) selon la revendication 2, **caractérisé en ce que** la pièce de fixation (60A) dudit au moins un pied avant (56) est formée par une équerre comportant une plaque (66) apte à être fixée sur le plancher (18) et prolongée par au moins une patte (68) ayant une extrémité libre recourbée déterminant un passage tubulaire pour le tube transversal inférieur (64).

4. Siège (14) selon l'une quelconque des revendications 1 à 3, **caractérisé en ce que** les moyens de basculement (28) comprennent deux pieds arrière (58) sensiblement parallèles dont les premières extrémités sont articulées sur l'assise (22), et dont les deuxièmes extrémités sont articulées sur une tige transversale inférieure (72) solidaire à chaque extrémité d'une pièce de fixation (60B).

5. Siège (14) selon les revendications 3 et 4 prises ensemble, **caractérisé en ce que** le tube transversal inférieur (64) est relié à la tige transversale inférieure (72) par au moins une barre de liaison longitudinale (76) s'étendant entre ladite extrémité recourbée et ladite tige transversale (72).

6. Siège (14) selon la revendication 4 ou 5, **caractérisé en ce que** chaque pièce de fixation (60B) des pieds arrière (58) est formée par une équerre comportant une plaque (74) apte à être fixée sur le plancher (18) et prolongée par une patte (75) solidaire de l'extrémité correspondante de la tige transversale inférieure (72).

7. Siège (14) selon l'une quelconque des revendications 1 à 6, **caractérisé en ce qu'**il comprend au moins un organe anti-intrusion (80) fixé sur ledit au moins un pied avant (56) et adapté pour s'engager dans un orifice (84) ménagé dans la pièce de fixation (60A) dudit au moins un pied avant (56).

8. Siège (14) selon la revendication 2, **caractérisé en ce qu'**il comprend un ressort (65) disposé sur le tube transversal inférieur (64) de manière à amortir l'escamotage et à participer au relevage du siège (14).

9. Véhicule automobile, du type comprenant un plancher (18) dans lequel est ménagée une cuvette (20), **caractérisé en ce qu'**il comprend au moins un siège (14) selon l'une quelconque des revendications précédentes, le siège (14) étant reçu dans la cuvette (20) et fixé sur le plancher (18) par les pièces de fixation (60).

## Claims

1. Seat (14) for a motor vehicle, of the type comprising:
- a base (22)
- a backrest (24) rotatably mounted on the base (22); and
- means (28) for tilting the base (22) and the backrest (24) between a position of use in which the backrest (24) is set upright in relation to the base (22), and a position retracted into a well (20) formed in a floor pan (18) of the vehicle and in which the backrest (24) is folded down onto the base (22), comprising at least one front pillar (56) and at least one rear pillar (58), **characterised in that** said tilting means (28) each comprise a first end articulated to the base (22), and a second end resting on the bottom of the floor pan (20) and articulated to at least one attachment part (60) attached to the floor pan (18) substantially at the edge of the well (20).

2. Seat (14) according to claim 1, **characterised in that** the tilting means (28) comprise two substantially parallel front pillars (56), the first ends of which are attached to an upper transverse tube (62) articulated to the base (22), and the second ends of which are attached to a lower transverse tube (64) articulated to an attachment part (60A).

3. Seat (14) according to claim 2, **characterised in that** the attachment part (60A) of said at least one front pillar (56) is formed by a bracket comprising a plate (66) suitable to be attached to the floor pan (18) and extended by at least one tab (68) having a free curved end defining a tubular passage for the lower transverse tube (64).

4. Seat (14) according to any one of the preceding claims 1 to 3, **characterised in that** the tilting means (28) comprise two substantially parallel rear pillars (58), the first ends of which are articulated to the base (22), and the second ends of which are articulated to a lower transverse rod (72) integral with each end of an attachment part (60B).

5. Seat (14) according to claim 3 and claim 4 taken together, **characterised in that** the lower transverse tube (64) is connected to the lower transverse rod (72) by at least one longitudinal connection bar (76) extending between said curved end and said transverse rod (72).

6. Seat (14) according to either claim 4 or claim 5, **characterised in that** each attachment part (60B) of the rear pillars (58) is formed by a bracket comprising a plate (74) suitable to be attached to the floor pan (18) and extended by a tab (75) integral with the corresponding end of the lower transverse rod (72).

7. Seat (14) according to any one of claims 1 to 6, **characterised in that** it comprises at least one anti-intrusion member (80) attached to said at least one front pillar (56) and adapted to engage in an opening (84) provided in the attachment part (60A) of said at least one front pillar (56).

8. Seat (14) according to claim 2, **characterised in that** it comprises a spring (65) arranged on the lower transverse tube (64) so as to soften the retraction and participate in the raising of the seat (14).

9. Motor vehicle of the type comprising a floor pan (18) in which a well (20) is provided, **characterised in that** it comprises at least one seat (14) according to any one of the preceding claims, the seat (14) being received in the well (20) and attached to the floor pan (18) by the attachment parts (60).

## Patentansprüche

1. Sitz (14) für ein Kraftfahrzeug, vom Typ umfassend:
- eine Sitzfläche (22);
- eine Rückenlehne (24), die auf der Sitzfläche (22) drehbar montiert ist; und
- Mittel (28) für das Verschwenken der Sitzfläche (22) und der Rückenlehne (24) zwischen einer Nutzposition, in der die Rückenlehne (24) bezüglich der Sitzfläche (22) aufgerichtet ist, und einer versenkten Position in einer Aussparung (20), die in einem Boden (18) des Fahrzeugs vorgesehen ist, und in der die Rückenlehne (24) auf die Sitzfläche (22) umgeklappt ist, umfassend mindestens einen vorderen Fuß (56) und mindestens einen hinteren Fuß (58), **dadurch gekennzeichnet, dass** die Schwenkmittel (28) jeweils ein erstes Ende, das an der Sitzfläche (22) angelenkt ist, und ein zweites Ende aufweisen, das auf dem Boden der Aussparung (20) aufliegt und an mindestens einem Befestigungsteil (60) angelenkt ist, das auf dem Boden (18) im Wesentlichen am Rand der Aussparung (20) befestigt ist.

2. Sitz (14) nach Anspruch 1, **dadurch gekennzeichnet, dass** die Schwenkmittel (28) zwei im Wesentlichen parallele vordere Füße (56) aufweisen, deren erste Enden an einem oberen Querrohr (62), das an der Sitzfläche (22) angelenkt ist, befestigt sind, und deren zweite Enden an einem unteren Querrohr (64), das an einem Befestigungsteil (60A) angelenkt ist, befestigt sind.

3. Sitz (14) nach Anspruch 2, **dadurch gekennzeichnet, dass** das Befestigungsteil (60A) des mindestens einen vorderen Fußes (56) von einem Winkel gebildet wird mit einer Platte (66), die auf dem Boden (18) befestigbar ist und sich über zumindest eine Lasche (68) mit einem freien Ende fortsetzt, das gekrümmt ist und einen rohrförmigen Durchgang für das untere Querrohr (64) bildet.

4. Sitz (14) nach einem der Ansprüche 1 bis 3, **dadurch gekennzeichnet, dass** die Schwenkmittel (28) zwei im Wesentlichen parallele hintere Füße (58) aufweisen, deren erste Enden an der Sitzfläche (22) angelenkt sind und deren zweite Enden an einer unteren Querstange (72) angelenkt sind, die mit jedem Ende eines Befestigungsteils (60B) fest verbunden sind.

5. Sitz (14) nach den Ansprüchen 3 und 4 zusammen, **dadurch gekennzeichnet, dass** das untere Querrohr (64) mit der unteren Querstange (72) durch zumindest eine Längsverbindungsstange (76) verbunden ist, die sich zwischen dem gekrümmten Ende und der Querstange (72) erstreckt.

6. Sitz (14) nach Anspruch 4 oder 5, **dadurch gekennzeichnet, dass** jedes Befestigungsteil (60B) der hinteren Füße (58) von einem Winkel gebildet wird mit einer Platte (74), die auf dem Boden (18) befestigbar ist und sich über zumindest eine Lasche (75) fortsetzt, die mit dem entsprechenden Ende der unteren Querstange (72) fest verbunden ist.

7. Sitz (14) nach einem der Ansprüche 1 bis 6, **dadurch gekennzeichnet, dass** er mindestens ein Eindringschutz-Organ (80) umfasst, das an dem mindestens einen vorderen Fuß (56) befestigt ist und dafür vorgesehen ist, in eine Öffnung (84) einzutreten, die in dem Befestigungsteil (60A) des mindestens einen vorderen Fußes (56) vorgesehen ist.

8. Sitz (14) nach Anspruch 2, **dadurch gekennzeichnet, dass** er eine Feder (65) umfasst, die an dem unteren Querrohr (64) derart angeordnet ist, dass sie das Versenken des Sitzes (14) abdämpft und das Hochklappen des Sitzes (14) unterstützt.

9. Kraftfahrzeug vom Typ mit einem Boden (18), in dem eine Aussparung (20) vorgesehen ist, **dadurch gekennzeichnet, dass** es zumindest einen Sitz (14) nach einem der vorhergehenden Ansprüche umfasst, wobei der Sitz (14) in der Aussparung (20) aufgenommen wird und durch die Befestigungsteile (60) an dem Boden (18) befestigt wird.
